(19) Europäisches Patentamt
European Patent Office
Office européen des brevets

(11) EP 2 377 832 A1

(12) **EUROPEAN PATENT APPLICATION**
published in accordance with Art. 153(4) EPC

(43) Date of publication:
**19.10.2011 Bulletin 2011/42**

(51) Int Cl.:
***C03C 17/25*** *(2006.01)*

(21) Application number: **09831954.4**

(86) International application number:
**PCT/JP2009/070706**

(22) Date of filing: **10.12.2009**

(87) International publication number:
**WO 2010/067850 (17.06.2010 Gazette 2010/24)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.12.2008 JP 2008317407**
**09.11.2009 JP 2009256068**

(71) Applicant: **Asahi Glass Company Limited**
**Chiyoda-ku**
**Tokyo 100-8405 (JP)**

(72) Inventors:
- **KUWAHARA, Yuichi**
  **Tokyo 100-8405 (JP)**
- **YONEDA, Takashige**
  **Tokyo 100-8405 (JP)**
- **ABE, Keisuke**
  **Tokyo 100-8405 (JP)**

(74) Representative: **Müller-Boré & Partner**
**Patentanwälte**
**Grafinger Straße 2**
**81671 München (DE)**

(54) **METHOD FOR PRODUCING GLASS SUBSTRATE HAVING SILICON OXIDE FILM ATTACHED THERETO**

(57) To provide a process for producing a glass substrate provided with a silicon oxide film having a low light reflectance and a high light transmittance, with good production efficiency, with which a silicon oxide film can be directly formed on a glass substrate or a glass ribbon at high temperature.
(1) A process for producing a glass substrate provided with a silicon oxide film, which comprises applying an organopolysiloxane to a glass substrate within a temperature range of from 400 to 650°C, which is thermally decomposed on the glass substrate to form a silicon oxide film, and (2) a process for producing a glass substrate provided with a silicon oxide film, which is a process for producing a glass substrate comprising forming molten glass into a glass ribbon, annealing the glass ribbon and cutting it to produce a glass substrate, wherein an organopolysiloxane is applied to the glass ribbon at a position where the glass ribbon is within a temperature range of from 400 to 650°C to form a silicon oxide film on the glass ribbon.

Fig. 3

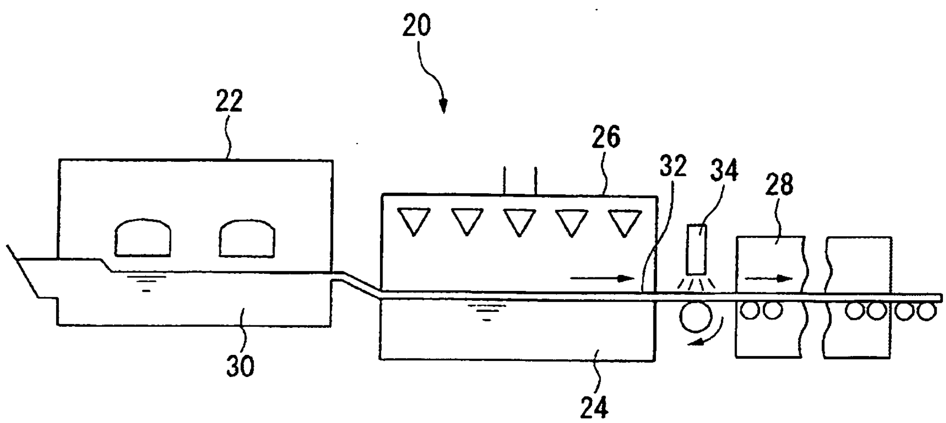


EP 2 377 832 A1

**Description**

TECHNICAL FIELD

The present invention relates to a process for producing a glass substrate provided with a silicon oxide film.

BACKGROUND ART

In order to adjust optical properties (such as the reflectance and the transmittance) of a glass substrate, formation of a thin film of an inorganic oxide on a glass substrate has been conducted.

As a method of forming a thin film of an inorganic oxide at a low cost, a method has been known wherein a coating liquid containing a precursor to be an inorganic oxide by thermal decomposition is sprayed over a glass substrate at high temperature so that the precursor is thermally decomposed to form a thin film of an inorganic oxide on the glass substrate. The thin film having a low reflectance and a high transmittance to be formed by this method is theoretically preferably a thin film consisting substantially solely of silicon oxide (hereinafter referred to as a silicon oxide film) in view of the refractive index.

Here, there is a problem such that no coating film will be formed if an organic silicon compound alone is contained in a coating liquid. Accordingly, in the coating liquid, a titanium compound or an organic metal compound to increase the reactivity of the organic silicon compound is added (Patent Document 1).

However, a thin film formed by applying a coating liquid containing an organic silicon compound and a titanium compound or an organic metal compound to a glass substrate at high temperature contains a metal oxide other than silicon oxide and thereby has a high refractive index, and accordingly the reflectance of the glass substrate is not sufficiently low.

Here, there is a problem such that if the sprayed precursor is vaporized before it reaches the glass substrate, a silicon oxide film will not be formed on the glass substrate. Further, there is also such a problem that if the thermal decomposition temperature of the precursor is too low, the precursor will be converted to a powder of silicon oxide before it reaches the glass substrate, and a continuous silicon oxide film will not be formed on the glass substrate. Therefore, it is considered to use a precursor having a high thermal decomposition temperature.

However, if the thermal decomposition temperature of the precursor is too high, vaporization will occur by priority rather than the film formation reaction on the glass substrate. Thus, no sufficient film deposition efficiency will be obtained, such being disadvantages in view of the cost and the process.

PRIOR ART DOCUMENT

PATENT DOCUMENT

Patent Document 1: JP-A-7-097237

DISCLOSURE OF INVENTION

TECHNICAL PROBLEM

The present invention provides a process for producing a glass substrate provided with a silicon oxide film having a low light reflectance and a high light transmittance, with good production efficiency, with which a silicon oxide film can be directly formed on a glass substrate at high temperature.

The present invention further provides a process for producing a glass substrate via a glass ribbon (a sheet-form continuous formed product of glass), which comprises directly forming a silicon oxide film on the glass ribbon at high temperature.

SOLUTION TO PROBLEM

The process for producing a glass substrate having a silicon oxide film of the present invention relates to the following embodiments (1) and (2).

(1) A process for producing a glass substrate provided with a silicon oxide film, which comprises applying an organopolysiloxane to a glass substrate within a temperature range of from 400 to 650°C to form a silicon oxide film on the glass substrate.

In the embodiment (1), it is preferred to use, as the organopolysiloxane, an organopolysiloxane having a main

exothermic peak when heated at a heating rate of 10°C/min within a range of at least 300°C and less than the temperature of the glass substrate when the organopolysiloxane is applied.
Further, it is preferred that the difference between the main exothermic peak temperature of the organopolysiloxane when heated at a heating rate of 10°C/min and the temperature of the glass substrate when the organopolysiloxane is applied, is at least 50°C.
Further, it is preferred that a coating liquid containing the organopolysiloxane and a liquid medium is applied to the glass substrate.
Further, it is preferred that the boiling point of the liquid medium is at least 60°C.
Further, it is preferred that the organopolysiloxane is a silicone oil.
Further, it is preferred that the viscosity average molecular weight of the silicone oil is from 3,500 to 130,000.
(2) A process for producing a glass substrate provided with a silicon oxide film, which is a process for producing a glass substrate comprising forming molten glass into a glass ribbon, annealing the glass ribbon and cutting it to produce a glass substrate, wherein an organopolysiloxane is applied to the glass ribbon at a position where the glass ribbon is within a temperature range of from 400 to 650°C to form a silicon oxide film on the glass ribbon.
In the embodiment (2), it is preferred that the molten glass is formed into a glass ribbon in a float bath, and the organopolysiloxane is applied between the float bath and the annealing step or in the annealing step.
Further, it is preferred to use, as the organopolysiloxane, an organopolysiloxane having a main exothermic peak when heated at a heating rate of 10°C/min within a range of at least 300°C and less than the temperature of the glass ribbon when the organopolysiloxane is applied.
Further, it is preferred that the difference between the main exothermic peak temperature of the organopolysiloxane when heated at a heating rate of 10°C/min and the temperature of the glass ribbon at a position where the organopolysiloxane is applied, is at least 50°C.
Further, it is preferred that a coating liquid containing the organopolysiloxane and a liquid medium is applied to the glass ribbon.
Further, it is preferred that the boiling point of the liquid medium is at least 60°C.
Further, it is preferred that the organopolysiloxane is a silicone oil.
Still further, it is preferred that the viscosity average molecular weight of the silicone oil is from 3,500 to 130,000.

## ADVANTAGEOUS EFFECTS OF INVENTION

According to the process for producing a glass substrate provided with a silicon oxide film of the present invention, a silicon oxide film can be directly formed on a glass substrate or a glass ribbon at high temperature, and a glass substrate provided with a silicon oxide film having a low light reflectance and a high light transmittance can be produced with good production efficiency.

## BRIEF DESCRIPTION OF DRAWINGS

Fig. 1 is a perspective view illustrating one example of the application method in Examples.
Fig. 2 is a graph illustrating the reflectances of glass substrates in Examples.
Fig. 3 is a view schematically illustrating one example of a glass production apparatus.

## DESCRIPTION OF EMBODIMENTS

The process for producing a glass substrate provided with a silicon oxide film of the present invention is a process which comprises applying an organopolysiloxane to a glass substrate or a glass ribbon to be a glass substrate and thermally decomposing the organopolysiloxane to form a silicon oxide film on the glass substrate or the glass ribbon.
As a method of applying the organopolysiloxane, preferred is a spray method of spraying a coating liquid containing the organopolysiloxane and a liquid medium by using a nozzle (such as a spray gun).
As a specific application method by the spray method, the following methods (i) and (ii) may, for example, be mentioned, and the method (ii) is preferred in view of the small number of steps and with a view to producing a glass substrate having a silicon oxide film with good production efficiency.

(i) A method of spraying a coating liquid over a glass substrate from a nozzle while the nozzle is moved over the fixed glass substrate.
(ii) A method of spraying a coating liquid over a glass ribbon from a nozzle provided at a position where the glass ribbon moving in one direction is within the aftermentioned temperature range. It is particularly preferred to spray

the coating liquid over a glass ribbon obtained by forming molten glass in a float bath in a process for producing a glass plate by the float process, between the float bath and an annealing step or in the annealing step.

The temperature of the glass substrate when the coating liquid is applied is from 400 to 650°C, and the organopolysiloxane is thermally decomposed on the glass substrate within the above temperature range and converted to silicon oxide. The temperature of the glass substrate when the coating liquid is applied is more preferably from 500 to 650°C. If the temperature of the glass substrate is less than 400°C, it will take long until the organopolysiloxane on the glass substrate is thermally decomposed to silicon oxide, thus leading to low productivity. When the temperature of the glass substrate is at most 650°C, since no glass ribbon is present in the molten bath, the atmosphere in the bath will hardly be contaminated during the spraying. Likewise, also in a case where the coating liquid is applied to the glass ribbon, the coating liquid is applied to the glass ribbon at a position where the glass ribbon is within a temperature range of from 400 to 650°C. The position where the coating liquid is to be applied is more preferably a position where the glass ribbon is within a temperature range of from 500 to 650°C. In a case where a glass substrate is produced by the float process, the temperature of the glass ribbon at a position immediately after the float bath is usually at a level of 650°C, although it depends on the glass composition of the glass substrate. The glass ribbon which has left the float bath is annealed in the annealing step and cooled to at most 400°C during the annealing step. Here, the temperature of the glass substrate or the glass ribbon means a surface temperature on a side to which the coating liquid is applied.

The material of the glass substrate may, for example, be soda lime silica glass, borosilicate glass or aluminosilicate glass. Further, the glass substrate is preferably a raw glass substrate which is not reinforced.

In the present invention, the organopolysiloxane means a polymer having siloxane bonds (-Si-O-Si-) as a skeleton and having organic groups bonded to the silicon atoms. Each organic group is an organic group in which the atom bonded to the silicon atom is a carbon atom. To some of the silicon atoms, an atom or a group (for example, a hydrogen atom, a hydroxy group or a hydrolyzable group) other than the organic group may be bonded. A hydrolyzable group is a group capable of being converted to a hydroxy group by reaction with water. For example, a halogen atom (such as a chlorine atom), a group in which the atom bonded to the silicon atom is an oxygen atom (such as an alkoxy group or an acyl group) or a group in which the atom bonded to the silicon atom is a nitrogen atom (such as an amino group) may, for example, be mentioned. Unlike the hydrolyzable group, the above organic group is nonhydrolyzable.

The organic group which is a nonhydrolyzable group is preferably a hydrocarbon group (an organic group comprising carbon atoms and hydrogen atoms). Further, the organic group may be an organic group having a hetero atom (such as an oxygen atom or a nitrogen atom), an organic group having a halogen atom (such as a fluorine atom) or the like. The hetero atom may be part of a reactive group (such as an epoxy group, a carboxy group or an amino group). The hydrocarbon group may, for example, be an alkyl group (such as a methyl group or an ethyl group), an alkenyl group (such as a vinyl group, an allyl group or an ethynyl group) or an aryl group (such as a phenyl group).

The organopolysiloxane may, for example, be a linear polymer in which the skeleton of the siloxane bonds has a linear structure, a branched polymer in which the skeleton has a branched structure, a crosslinked polymer having the skeleton has a network structure, or a three-dimensional crosslinked polymer in which the skeleton has a three-dimensional network structure. Further, as another organopolysiloxane, a crosslinked polymer in which at least two skeletons of the siloxane bonds having a linear structure are connected with a bivalent or higher valent organic group (such as an alkylene group), a polymer in which the skeleton of the siloxane bonds and an organic polymer skeleton having no siloxane bond are bonded, may, for example, be mentioned.

As the organopolysiloxane in the present invention, any of the above-mentioned organopolysiloxanes may be used so long as it is thermally decomposed and converted to silicon oxide on the glass substrate or the glass ribbon at a temperature within the above temperature range. Particularly, an organopolysiloxane which is liquid by itself, one which can be soluble in a liquid medium to be a solution, or one which can be dispersed in a liquid medium to be a dispersion is preferred.

As the organopolysiloxane used in the present invention, in the case of application to a glass substrate, an organopolysiloxane having a main exothermic peak when heated at a heating rate of 10°C/min within a range of at least 300°C and less than the temperature of the glass substrate when the organopolysiloxane is applied, is preferred. Further, in the case of application to a glass ribbon, it is preferably an organopolysiloxane having a main exothermic peak when heated at a heating rate of 10°C/min within a range of at least 300°C and less than the temperature of the glass ribbon at a position where the organopolysiloxane is applied. The temperature at a position where the main exothermic peak appears when the organopolysiloxane is heated at a heating rate of 10°C/min will hereinafter be referred to as an exothermic peak temperature.

At the exothermic peak temperature or higher, the organopolysiloxane is thermally decomposed to be converted to silicon oxide. Accordingly, an organopolysiloxane having an exothermic peak temperature lower than the temperature of the glass substrate or the temperature of the glass ribbon at the organopolysiloxane application position is used. In other words, when an organopolysiloxane having a certain exothermic peak temperature is used, the temperature of the glass substrate to which this organopolysiloxane is applied is set to be a temperature exceeding the exothermic

peak temperature, and the position at which the organopolysiloxane is applied to a glass ribbon is set to be a position at which the temperature of the glass ribbon exceeds the exothermic peak temperature.

As described above, the temperature of the glass substrate to which the organopolysiloxane is applied or the temperature of the glass ribbon at a position where the organopolysiloxane is applied is from 400 to 650°C. Accordingly, the organopolysiloxane used in the present invention is selected from ones having an exothermic peak temperature less than 650°C.

Further, if the temperature of the glass substrate or the glass ribbon and the exothermic peak temperature of the organopolysiloxane are close to each other, the rate of the thermal decomposition reaction by which the organopolysiloxane is converted to silicon oxide tends to be low. Accordingly, byproducts such as carbides may remain, and the productivity may be insufficient. The difference between both the temperatures is preferably at least 30°C, more preferably at least 50°C, and in order to obtain a sufficient reaction rate, it is further preferably at least 100°C. Considering these conditions, the organopolysiloxane to be used in the present invention is preferably selected from organopolysiloxanes having an exothermic peak temperature within a range of at least 300°C and less than the temperature of the glass substrate or the glass ribbon when the organopolysiloxane is applied.

By the exothermic peak temperature being at least 300°C, in a case where the organopolysiloxane is applied e.g. by spraying by means of a spray method, the organopolysiloxane is less likely to be thermally decomposed before it reaches the surface of the glass substrate or the glass ribbon. When the exothermic peak temperature is less than the temperature of the glass substrate or the glass ribbon when the organopolysiloxane is applied, film-deposition reaction will take place immediately after the organopolysiloxane reaches the surface of the glass substrate or the glass ribbon, whereby a silicon oxide film can be formed on the glass substrate or the glass ribbon with a good film deposition efficiency.

The organopolysiloxane in the present invention is preferably a linear polymer, particularly preferably a linear diorganopolysiloxane among the above organopolysiloxanes. A diorganopolysiloxane is a polymer having silyloxy groups to which two organic groups are bonded as repeating units, and in a linear diorganopolysiloxane, three organic groups are bonded to the silicon atom at each terminal. Some of the organic groups may be a hydrogen atom. Each organic group is usually an alkyl group (particularly a methyl group) having at most 4 carbon atoms, and some of the organic groups may be an alkenyl group or a phenyl group. Further, each organic group may be an organic group having a hetero atom (such as an oxygen atom or a nitrogen atom), an organic group having a halogen atom (such as a fluorine atom) or the like, as mentioned above.

The organopolysiloxane in the present invention is particularly preferably a silicone oil. The silicone oil in the present invention means a linear organopolysiloxane which is an oily compound having fluidity at room temperature.

The silicone oil is usually represented by the following formula (1):

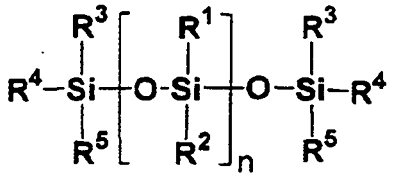

(1)

In the formula (1), each of $R^1$ to $R^5$ is an organic group or a hydrogen atom, and n is an integer of at least 1. In a case where each of $R^1$ to $R^5$ is an organic group, such organic groups may be the same or different from each other. The bifunctional unit in the bracket [ ] is usually called D unit, and each of monofunctional units outside the bracket [ ] at both terminals is called M unit. In a case where n is an integer of at least 2 (that is, in a case where there are two or more D units), such D units may be different from each other. The two M units may also be different from each other. D units being different from each other means that they are different in at least one of $R^1$ and $R^2$. M units being different from each other means that they are different in at least one of $R^3$, $R^4$ and $R^5$.

The silicone oil represented by the formula (1) is preferably a silicone oil wherein all $R^1$ to $R^5$ are a methyl group, or a silicone oil wherein some of $R^1$ to $R^5$ are a hydrogen atom or an organic group other than a methyl group, and the others are a methyl group. Hereinafter, in a case where all $R^1$ to $R^5$ are a methyl group, such D unit will be referred to as $D^1$ unit and such M unit will be referred to as $M^1$ unit. On the other hand, D unit wherein one of $R^1$ and $R^2$ is a methyl group and the other is a hydrogen atom or an organic group other than a methyl group will be referred to as $D^2$ unit, and M unit wherein two of $R^3$ to $R^5$ are a methyl group and the other one is a hydrogen atom or another organic group will be referred to as $M^2$ unit. According to this representation, a silicone oil represented by the formula (1) wherein all $R^1$ to $R^5$ are a methyl group can be represented by $M^1(D^1)_nM^1$. In a case where the silicone oil represented by the formula (1) has a hydrogen atom or an organic group other than a methyl group, bonded to a silicon atom, preferred is a silicone oil represented by $M^1(D^1)_p(D^2)_qM^1$ a silicone oil represented by $M^2(D^1)_nM^2$ or a silicone oil represented by $M^2(D^1)_p(D^2)_qM^2$ (wherein each of p and q is an integer of at least 1, and p+q=n). The organic group other than a methyl

group is preferably an alkyl group (such as an ethyl group) having at least 2 carbon atoms, a polyfluoroalkyl group, a phenyl group, an organic group having a hetero atom (such as an oxygen atom or a nitrogen atom) (particularly an organic group having a reactive group (such as an epoxy group or an amino group)) or the like.

A silicone oil wherein all $R^1$ to $R^5$ are a methyl group is called dimethyl silicone oil. Further, a silicone oil wherein some of $R^1$ to $R^5$ are a phenyl group and the others are a methyl group is called methyl phenyl silicone oil, and a silicone oil wherein some of $R^1$ to $R^5$ are a hydrogen atom and the others are a methyl group is called methyl hydrogen silicone oil. Further, a silicone oil wherein some of $R^1$ to $R^5$ are a long chain alkyl group (preferably a $C_{6-22}$ linear alkyl group), an organic group having a hetero atom (such as an oxygen atom or a nitrogen atom) or an organic group having a halogen atom (such as a fluorine atom) and the others are a methyl group is called a modified silicone oil. The modified silicone oil is called, for example, epoxy-modified silicone oil, carboxy-modified silicone oil, long chain alkyl-modified silicone oil, amino-modified silicone oil or polyether-modified silicone oil, depending on the type of the organic group other than a methyl group or the type of a reactive group which this organic group has. The silicone oil in the present invention is preferably such a silicone oil, particularly preferably a long chain alkyl-modified silicone oil.

n in the formula (1) represents the degree of polymerization, and among silicone oils wherein $R^1$ to $R^5$ are the same, usually the higher n is, the higher the viscosity is. Accordingly, the value of n (i.e. the molecular weight) can be measured by the viscosity of a silicone oil, and such a molecular weight is called viscosity average molecular weight. The silicone oil in the present invention is preferably a silicone oil having a viscosity average molecular weight of from 3,500 to 130,000, more preferably a silicone oil of from 3,500 to 100,000, further preferably a silicone oil of from 6,000 to 55,000.

When the silicone oil has a viscosity average molecular weight of at least 3,500, it will hardly be vaporized before it is attached to the glass substrate or the glass ribbon, whereby the formation efficiency of a silicon oxide film will be good. When the silicone oil has a viscosity average molecular weight of at most 130,000, the haze can be suppressed low, and a transmittance can be maintained high. Further, the viscosity of the silicone oil will not be too high, whereby good handling efficiency will be obtained.

The viscosity average molecular weight of a silicone oil is obtained by the following procedure.

(I) The kinematic viscosity η (25°C) of the silicone oil is obtained.

(II) When the kinematic viscosity η is at least 100 $mm^2$/sec, the molecular weight M is obtained from Barry's formula of the following formula (2). When the kinematic viscosity η is less than 100 $mm^2$/sec, the molecular weight M is obtained from Warrik's formula of the following formula (3).

$$\log \eta^{cs/25°C} = 1.00 + 0.0123 M^{0.5} \qquad (2)$$

$$\log \eta^{p/40°C} = 1.43 \log M - 5.54 \qquad (3)$$

wherein

$\eta^{cs/25°C}$: the kinematic viscosity at 25°C,

$\eta^{p/40°C}$: the viscosity at 50°C,

M: molecular weight.

As described above, the silicone oil is particularly preferably selected from silicone oils having an exothermic peak temperature within a range of at least 300°C and less than the temperature of the glass substrate or the glass ribbon when the organopolysiloxane is applied. Such silicone oils may, for example, be dimethyl silicone oil, methyl hydrogen silicone oil, epoxy-modified silicone oil, carboxy-modified silicone oil and long chain alkyl-modified silicone oil.

As described above, as the organopolysiloxane in the present invention, in addition to the silicone oil, an organopolysiloxane which can be thermally decomposed to be converted to silicon oxide on a glass substrate or a glass ribbon within a temperature range of from 400 to 650°C. Such an organopolysiloxane may, for example, be a silicone resin, a silicone rubber, a silicone elastomer or a compound having a siloxane bond as a skeleton which is a material therefor.

A silicone resin is a curable organopolysiloxane comprising, as the main constituting units, trifunctional units represented by $R^6SiO_{3/2}$ (wherein $R^6$ is the same organic group as for the above $R^1$ to $R^5$) in which one organic group is bonded to a silicone atom, called T units. The silicone resin may have the above D unit in addition to T units. Further, it may have a tetrafunctional unit (represented by $SiO_{4/2}$) called Q unit or the above M unit. The silicone resin before curing may be used as the organopolysiloxane in the present invention. A silicone rubber and a silicone elastomer are

polymers obtainable by crosslinking a crosslinkable organopolysiloxane (an organopolysiloxane having a crosslinkable organic group (such as a vinyl group), an organopolysiloxane having a silicon atom to which a silanol group or a hydrolyzable group is bonded or the like), and the crosslinked polymer or the crosslinkable organopolysiloxane as the material may be used as the organopolysiloxane in the present invention.

Application of the organopolysiloxane is carried out by applying a liquid organopolysiloxane or an organopolysiloxane powder directly to the glass substrate or the glass ribbon. More particularly, it is carried out by applying a coating liquid comprising a solution or a dispersion of the organopolysiloxane to the glass substrate or the glass ribbon. The liquid medium in the coating liquid may be removed by evaporation before the coating liquid reaches the surface of the glass substrate or the glass ribbon in the case of e.g. spraying, but usually it is removed by evaporation after the coating liquid reached the surface of the glass substrate or the glass ribbon at high temperature. In order to form a uniform silicon oxide film on the glass substrate or the glass ribbon, it is preferred to form a film of the organopolysiloxane on the glass substrate or the glass ribbon and then thermally decompose the organopolysiloxane. For that purpose, it is preferred that a liquid medium having a relatively high boiling point is used to form a film of the organopolysiloxane containing the liquid medium on the glass substrate or the glass ribbon, and then the liquid medium is evaporated.

The liquid medium to be used for the solution of the organopolysiloxane may be a solvent in which the organopolysiloxane is dissolved, and it may, for example, be a hydrocarbon (such as a saturated aliphatic hydrocarbon or an aromatic hydrocarbon), an unsaturated hydrocarbon, dichloroethane, trichloroethylene, chlorobenzene, dimethylformamide, methanol, ethanol, acetone, cyclohexanone or acetylacetone. The liquid medium to be used for the dispersion (including an emulsion) of the organopolysiloxane may be one in which the organopolysiloxane is not soluble, and specifically, water may be mentioned. Further, depending on the type of the organopolysiloxane, an organic solvent in which the organopolysiloxane is not soluble may be used, and as the organic solvent, the above solvent may be mentioned.

The boiling point of the liquid medium is preferably at least 60°C, more preferably at least 65°C. When the boiling point of the liquid medium is at least 60°C, the liquid medium is less likely to be vaporized before it is attached to the surface of the glass substrate or the glass ribbon at high temperature, whereby a good formation efficiency of a silicon oxide film will be obtained. The upper limit of the boiling point of the liquid medium is not limited so long as the liquid medium has a boiling point lower than the temperature of the surface of the glass substrate or the glass ribbon to which the liquid medium is applied. However, usually a liquid medium having a boiling point less than 300°C is used. In order to quickly remove the liquid medium by evaporation on the glass substrate or the glass ribbon, the boiling point of the liquid medium is preferably at most 250°C. The boiling point of the liquid medium is more preferably from 80 to 200°C.

The solid content concentration (the concentration of the organopolysiloxane in the coating liquid, the same applies hereinafter) of the coating liquid is preferably from 5 to 60 mass%, more preferably from 10 to 50 mass% in view of the formation efficiency of a silicon oxide film and the viscosity (handling efficiency) of the coating liquid.

The amount of application of the coating liquid is preferably such an amount that the thickness of the silicon oxide film at the thinnest portion is from 10 to 300 nm, and there may be a protruded portion of at least 300 nm.

The organopolysiloxane is thermally decomposed on the glass substrate or the glass ribbon and converted to silicon oxide. On that occasion, presence of oxygen is necessary in the thermal decomposition atmosphere. In an atmosphere without oxygen, the organopolysiloxane tends to be depolymerized into a low molecular weight organopolysiloxane, and such a low molecular weight organopolysiloxane, which is a low boiling point compound, is likely to be vaporized. Accordingly, in an atmosphere without oxygen, the organopolysiloxane will not be converted to silicon oxide but is likely to be vaporized and disappear. Accordingly, thermal decomposition of the organopolysiloxane is carried out in an oxygen-containing atmosphere (such as in the air). In a case where the organopolysiloxane is applied to a glass ribbon formed by the float process, the application position is at the downstream of the float bath outlet. Since the interior of the float bath is usually kept in a reducing atmosphere, a silicon oxide film will hardly form even if the organopolysiloxane is applied to the glass ribbon in the interior of the float bath. At the downstream of the float bath outlet, even if a reducing gas discharged from the float bath is included in the air, usually oxygen in a sufficient amount for formation of silicon oxide is present in the atmosphere. Further, the glass ribbon after the float bath outlet moves to an annealing apparatus (such as an annealing furnace), and the atmosphere in the interior of the annealing apparatus is also usually in a heated air atmosphere. Accordingly, the position at which the organopolysiloxane is applied to the glass ribbon is preferably at a position between the float bath and the annealing step, or at a position in the annealing step.

The thickness of the silicon oxide film is preferably from 10 to 300 nm. A silicon oxide film having a thickness within such a range is useful as an antireflection film. However, in a case where a silicon oxide film to be used for a purpose other than antireflection is to be formed, the thickness is not necessarily limited to such a range.

By the above-described process for producing a glass substrate provided with a silicon oxide film of the present invention, the organopolysiloxane is applied to a heated glass substrate or glass ribbon, and accordingly a silicon oxide film can be formed with good production efficiency as compared with a sputtering method or a CVD method. Further, since an organopolysiloxane is used, a silicon oxide film can be formed without using an organic metal compound. Accordingly, a glass substrate having a silicon oxide film with a low light reflectance and a high light transmittance, can be produced with good production efficiency.

EXAMPLES

Now, the present invention will be described in further detail with reference to Examples. However, it should be understood that the present invention is by no means restricted to such specific Examples.
Examples 1 to 13 and 16 to 21 are Examples of the present invention, and Examples 14 and 15 are Comparative Examples.

(Exothermic peak temperature)

Exothermic peaks which appeared when a silicone oil was heated from 25°C to 700°C at a heating rate of 10°C/min were measured by TG-DTA (manufactured by Bruker AXS, ASC 7000S). The temperature at which the highest exothermic peak among the exothermic peaks appeared was regarded as the main exothermic peak temperature.

(Kinematic viscosity)

The kinematic viscosity (25°C) of a silicone oil was measured by an Ubbellohde viscometer as specified in JIS Z8803 (1991).

(Reflectance)

With respect to the reflectance of a glass substrate, the one surface reflectance of a glass substrate was measured with respect to a light having a wavelength of from 300 to 1,200 nm by using a spectrophotometer (manufactured by Hitachi High-Technologies Corporation, U4100). In a case where a coating liquid was applied, the one surface reflectance of the glass substrate on the applied side was measured.

(Reduction in reflectance)

The difference in the reflectance (the reduction in the reflectance) was obtained by subtracting the average of reflectances at wavelengths of from 550 to 650 nm of a glass substrate on which a silicon oxide film was formed from the average of reflectances at wavelengths of from 550 to 650 nm of a glass substrate on which no silicon oxide film was formed.

(Haze)

The haze of a glass substrate was measured by using a haze meter (manufactured by BYK-Gardener, Haze-gard plus E-4725).

EXAMPLE 1

A silicone oil (dimethyl silicone oil as identified in Table 1, manufactured by Shin-Etsu Silicones, viscosity average molecular weight: 15,000, 25°C kinematic viscosity: 300 $mm^2/s$) was dissolved in n-hexane to obtain a coating liquid having a solid content concentration of 10 mass%.
As an application apparatus, KM-100 (manufactured by SPD Laboratory Inc.) was used. As a glass substrate, soda lime glass (manufactured by Asahi Glass Company, Limited) of 10 cm x 10 cm x 3 mm was used.
The glass substrate was placed on a stage, and a heater was provided on the rear side of the stage not to be in contact with the stage. The glass substrate was heated to 600°C via the stage by the radiant heat of the heater. The temperature of the glass substrate was measured by bringing a thermocouple in contact with one side surface of the glass substrate. Since the glass substrate was heated for a sufficient time before the coating liquid was sprayed by a spray gun, the temperature measured here can be considered to be substantially the same as the surface temperature of the glass substrate.
After the glass substrate was heated to 600°C, as shown in Fig. 1, the coating liquid was sprayed over the glass substrate 10 from a spray gun 12 while the spray gun 12 was moved in three steps S1 to S3 above the glass substrate 10. Regarding three steps S1 to S3 as one cycle, application was carried out in five cycles. Further, when the coating liquid was sprayed from the spray gun 12, the liquid-sending pressure to the spray gun 12 was adjusted so that the liquid-sending rate would be from 0.4 to 0.6 mL/sec, and the spraying pressure was set to 0.1 MPa. The application time in each step was 10 seconds. Spraying was carried out in a state where the stage, the glass substrate and the spray gun were surrounded by an explosion-proof apparatus, and the ambient temperature was not adjusted.
Of the glass substrate on which a silicon oxide film was formed, the reduction in the reflectance and the haze

were measured. The results are shown in Table 1.

EXAMPLES 2 to 8

A glass substrate on which a silicon oxide film was formed was obtained in the same manner as in Example 1 except that the silicone oil was changed to a silicone oil (dimethyl silicone oil as identified in Table 1, manufactured by Shin-Etsu Silicones) having a 25°C kinematic viscosity and a viscosity average molecular weight as identified in Table 1.

Of the glass substrate on which a silicon oxide film was formed, the reduction in the reflectance and the haze were measured. The results are shown in Table 1.

TABLE 1

| Example | Silicone oil | 25°C kinematic viscosity ($mm^2/s$) | Viscosity average molecular weight (x1000) | Liquid medium | Application cycle (number) | Reduction in reflectance (%) | Haze (%) |
|---|---|---|---|---|---|---|---|
| 2 | Dimethyl silicone oil | 50 | 3.5 | n-Hexane | 5 | 0.6 | 0.23 |
| 3 | Dimethyl silicone oil | 100 | 6 | n-Hexane | 5 | 0.9 | 0.45 |
| 1 | Dimethyl silicone oil | 300 | 15 | n-Hexane | 5 | 1.7 | 0.61 |
| 4 | Dimethyl silicone oil | 1000 | 25 | n-Hexane | 5 | 1.58 | 0.29 |
| | | | | | 5 | 1.46 | - |
| | | | | | 5 | 1.43 | 0.72 |
| 5 | Dimethyl silicone oil | 10000 | 55 | n-Hexane | 5 | 1.74 | 0.97 |
| | | | | | 5 | 2.1 | - |
| 6 | Dimethyl silicone oil | 30000 | 80 | n-Hexane | 5 | 2.46 | 1.51 |
| 7 | Dimethyl silicone oil | 100000 | 100 | n-Hexane | 5 | 1.91 | 2.33 |
| 8 | Dimethyl silicone oil | 300000 | 130 | n-Hexane | 5 | 3.45 | 6.58 |

EXAMPLES 9 to 11

A glass substrate on which a silicon oxide film was formed was obtained in the same manner as in Example 1 except that the liquid medium was changed to a solvent as identified in Table 2 and the number of application cycles was as identified in Table 2.

Of the glass substrate on which a silicon oxide film was formed, the reduction in the reflectance and the haze were measured. The results are shown in Table 2.

TABLE 2

| Example | Silicone oil | 25°C kinematic viscosity ($mm^2/s$) | Viscosity average molecular weight (×1000) | Liquid medium | Boiling point of solvent (°C) | Application cycle (number) | Reduction in reflectance (%) | Haze (%) |
|---|---|---|---|---|---|---|---|---|
| 9 | Dimethyl silicone oil | 300 | 15 | n-Pentane | 36 | 5 | 0.2 | 0.16 |
| 1 | Dimethyl silicone oil | 300 | 15 | n-Hexane | 68.74 | 5 | 1.7 | 0.61 |
| 10 | Dimethyl silicone oil | 300 | 15 | n-Decane | 174 | 5 | 1.61 | 0.89 |
| 11 | Dimethyl silicone oil | 300 | 15 | n-Hexadecane | 286.5 | 1 | 3.38 | 3.32 |

EXAMPLES 12 and 13

A glass substrate on which a silicon oxide film was formed was obtained in the same manner as in Example 1 except that the silicone oil was changed to a silicone oil (manufactured by Shin-Etsu Silicones) as identified in Table 3.

Of the glass substrate on which a silicon oxide film was formed, the reduction in the reflectance and the haze were measured. The results are shown in Table 3. Further, the reflectance of the glass substrate in Example 13 is shown in Fig. 2.

TABLE 3

| Example | Silicone oil | 25°C kinematic viscosity ($mm^2/s$) | Viscosity average molecular weight (×1000) | Liquid medium | Application cycle (number) | Reduction in reflectance (%) | Haze (%) |
|---|---|---|---|---|---|---|---|
| 1 | Dimethyl silicone oil | 300 | 15 | n-Hexane | 5 | 1.7 | 0.61 |
| 12 | Methyl phenyl-modified silicone oil | 300 | 15 | n-Hexane | 5 | 1.10 | 0.15 |
| 13 | Mercapto-modified silicone oil | 300 | 15 | n-Hexane | 5 | 1.95 | 0.61 |

EXAMPLE 14

A coating stock solution comprising 80.4 mass% of a solvent (manufactured by Japan Alcohol Trading Co., Ltd., SOLMIX AP-11), 12.0 mass% of 0.07 mol/L $HNO_3$ and 7.67 mass% of tetraethoxysilane was prepared. The stock solution was diluted with water to obtain a coating liquid having a solid content concentration of 1 mass%.

Application of one cycle was carried in the same manner as in Example 1 except that this coating liquid was used. The glass substrate was observed by a scanning electron microscope and as a result, no silicon oxide film was formed. The reflectance of the glass substrate is shown in Fig. 2. As compared with the reflectance of the glass substrate alone before application of the coating liquid, substantially no decrease in the reflectance was observed.

EXAMPLES 15 to 17

A glass substrate on which a silicon oxide film was formed was obtained in the same manner as in Example 13 except that the temperature of the glass substrate was changed to the temperature as identified in Table 4, and the number of application cycles was as identified in Table 4.

The solidified state of the coating liquid on the surface of the glass substrate was observed. The results are shown in Table 4. With respect to a glass substrate on which the coating liquid was solidified and formation of a silicon oxide film was confirmed, the reduction in the reflectance and the haze were measured. The results are shown in Table 4.

With respect to the sample applied to the glass substrate at a temperature of 300°C, the coating liquid was not solidified, and no silicon oxide film was formed.

TABLE 4

| Example | Silicone oil | 25°C kinematic viscosity ($mm^2/s$) | Viscosity average molecular weight (×1000) | Liquid medium | Application cycle (number) | Temperature of glass substrate (°C) | Reduction in reflectance (%) | Haze (%) | Solidified state of coating liquid |
|---|---|---|---|---|---|---|---|---|---|
| 15 | Mercapto-modified silicone oil | 300 | 15 | n-Hexane | 1 | 300 | - | - | Not solidified |
| 16 | Mercapto-modified silicone oil | 300 | 15 | n-Hexane | 1 | 400 | 2.13 | 1.43 | Partially not solidified |
| 17 | Mercapto-modified silicone oil | 300 | 15 | n-Hexane | 1 | 500 | 1.35 | 0.84 | Solidified |
| 13 | Mercapto-modified silicone oil | 300 | 15 | n-Hexane | 5 | 600 | 1.95 | 0.61 | Solidified |

EXAMPLE 18

Using a glass production apparatus shown in Fig. 3, a glass substrate on which a silicon oxide film is formed is produced. The glass production apparatus 20 comprises a melting furnace 22 which melts glass raw materials into molten glass 30, a float bath 26 which forms the molten glass 30 into a glass ribbon 32 to be a glass substrate by floating the molten glass 30 supplied from the melting furnace 22 on the surface of molten tin 24, an annealing furnace 28 to anneal the glass ribbon 32, and an air spray gun 34 provided between the outlet of the float bath 26 and the inlet of the annealing furnace 28 with a height of 570 mm above the glass ribbon 32. The glass ribbon 32 which has left the annealing furnace 28 is cut by a cutting apparatus not shown to be a glass substrate.

A coating liquid comprising 50 mass% of n-decane (manufactured by Japan Energy Corporation) and 50 mass% of a long chain alkyl-modified silicone oil (manufactured by Shin-Etsu Chemical Co., Ltd., model: KF-412, viscosity average molecular weight: 18,000, exothermic peak temperature: 490°C) is prepared.

The coating liquid is sprayed from a spray gun 34 over the glass ribbon 32 moving at a transfer rate of 4.2 m/min, at a position between the float bath 26 and the annealing furnace 28 at which the surface temperature of the glass ribbon 32 is 600°C, at a liquid-sending rate of 36 kg/hr under a spraying pressure of 4.5 $kg/cm^2$ to form a film of the silicone oil on the glass ribbon 32, and then the silicone oil is thermally decomposed to form a silicon oxide film on the glass ribbon 32.

EXAMPLES 19 to 23

A glass substrate on which a silicon oxide film is formed is obtained in the same manner as in Example 1 except that the application time in each step was 0.3 second, the number of cycles of application of the silicone oil is as identified in Table 5, and the type of the silicone oil and the liquid medium are changed. The results are shown in Table 5.

TABLE 5

| Example | Silicone oil | 25°C kinematic viscosity ($mm^2/s$) | Viscosity average molecular weight (×1000) | Liquid medium | Application cycle (number) | Exothermic peak temperature (°C) | Reduction in reflectance (%) | Haze (%) |
|---|---|---|---|---|---|---|---|---|
| 19 | Dimethyl silicone oil | 300 | 15 | n-Decane | 30 | 540 | 0.1 | 0.16 |
| 20 | Long chain alkyl-modified silicone oil | 500 | 18 | n-Decane | 30 | 490 | 1.51 | 0.86 |
| 21 | Epoxy-modified silicone oil | 1500 | 30 | n-Toluene | 30 | 460 | 1.15 | 0.82 |
| 22 | Long chain alkyl-modified silicone oil | 500 | 18 | n-Decane | 15 | 440 | 2.20 | 0.18 |
| 23 | Triethoxysilylethyl polydimethylsiloxyethyl hexyl dimethicone | 45 | 3.5 | n-Decane | 15 | 540 | 1.51 | 0.23 |

INDUSTRIAL APPLICABILITY

The glass substrate having a silicon oxide film obtained by the production process of the present invention is useful as a cover glass for a solar cell, a protective plate for a display, glass for an automobile, glass for a railway vehicle, glass for shipping, glass for a building material, etc.
The entire disclosures of Japanese Patent Application No. 2008-317407 filed on December 12, 2008 and Japanese Patent Application No. 2009-256068 filed on November 9,2009 including specifications, claims, drawings and summaries are incorporated herein by reference in their entireties.

REFERENCE SYMBOLS

10: glass substrate
26: float bath
28: annealing furnace
30: molten glass
32: glass ribbon
34: air spray gun

**Claims**

**1.** A process for producing a glass substrate provided with a silicon oxide film, which comprises applying an organopolysiloxane to a glass substrate within a temperature range of from 400 to 650°C to form a silicon oxide film on the glass substrate.

**2.** The production process according to Claim 1, wherein, as the organopolysiloxane, an organopolysiloxane having a main exothermic peak when heated at a heating rate of 10 °C/min within a range of at least 300°C and less than the temperature of the glass substrate when the organopolysiloxane is applied, is used.

**3.** The production process according to Claim 2, wherein the difference between the main exothermic peak temperature of the organopolysiloxane when heated at a heating rate of 10 °C/min and the temperature of the glass substrate when the organopolysiloxane is applied, is at least 50°C.

**4.** The production process according to any one of Claims 1 to 3, wherein a coating liquid containing the organopolysiloxane and a liquid medium is applied to the glass substrate.

**5.** The production process according to Claim 4, wherein the boiling point of the liquid medium is at least 60°C.

**6.** The production process according to any one of Claims 1 to 5, wherein the organopolysiloxane is a silicone oil.

**7.** A process for producing a glass substrate provided with a silicon oxide film, which comprises applying a coating liquid containing a silicone oil and a solvent to a glass substrate heated to a temperature of from 400 to 650°C to form a silicon oxide film.

**8.** The production process accruing to Claim 7, wherein the boiling point of the solvent is at least 60°C.

**9.** The production process according to Claim 6 or 7, wherein the viscosity average molecular weight of the silicone oil is from 3,500 to 130,000.

**10.** A process for producing a glass substrate provided with a silicon oxide film, which is a process for producing a glass substrate comprising forming molten glass into a glass ribbon, annealing the glass ribbon and cutting it to produce a glass substrate, wherein an organopolysiloxane is applied to the glass ribbon at a position where the glass ribbon is within a temperature range of from 400 to 650°C to form a silicon oxide film on the glass ribbon.

**11.** The production process according to Claim 10, wherein the process for producing a glass substrate is a process for producing glass by the float process, the molten glass is formed into a glass ribbon in a float bath in the procedure

for production of glass by the float process, and the organopolysiloxane is applied between the float bath and the annealing step or in the annealing step.

**12.** The production process according to Claim 10 or 11, wherein, as the organopolysiloxane, an organopolysiloxane having a main exothermic peak when heated at a heating rate of 10 °C/min within a range of at least 300°C and less than the temperature of the glass ribbon at a position where the organopolysiloxane is applied, is used.

**13.** The production process according to Claim 12, wherein the difference between the main exothermic peak temperature of the organopolysiloxane when heated at a heating rate of 10 °C/min and the temperature of the glass ribbon at a position where the organopolysiloxane is applied, is at least 50°C.

**14.** The production process according to any one of Claims 10 to 13, wherein a coating liquid containing the organopolysiloxane and a liquid medium is applied to the glass ribbon.

**15.** The production process according to Claim 14, wherein the boiling point of the liquid medium is at least 60°C.

**16.** The production process according to any one of Claims 10 to 15, wherein the organopolysiloxane is a silicone oil.

**17.** The production process according to Claim 16 , wherein the viscosity average molecular weight of the silicone oil is from 3,500 to 130,000.

**18.** A process for producing a glass substrate provided with a silicon oxide film, which comprises, between a step of forming molten glass by the float process to obtain a glass substrate and an annealing step of annealing the glass substrate, or in the annealing step, applying the coating liquid as defined in any one of Claims 7 to 9 to the glass substrate.

Fig. 1

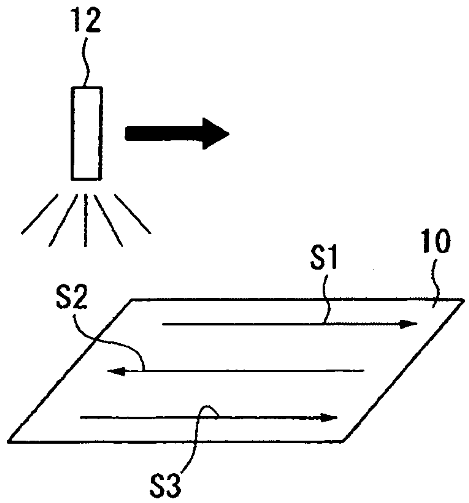
12
S1
10
S2
S3

Fig. 2

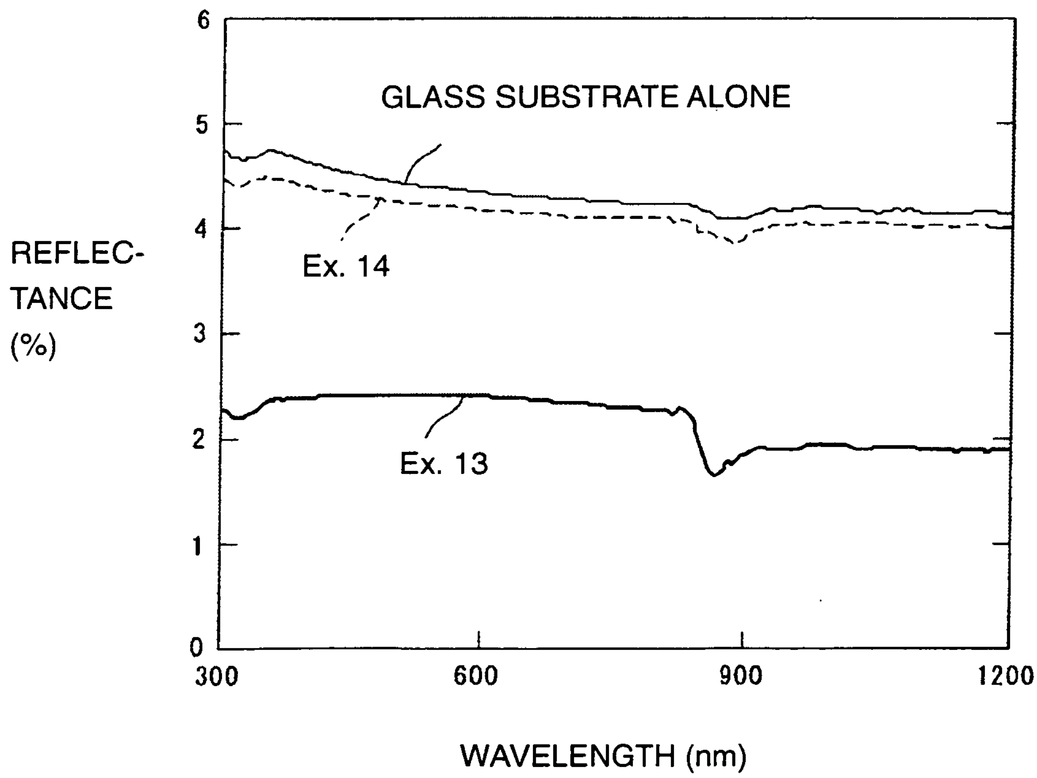
6
5
4
3
2
1
0
GLASS SUBSTRATE ALONE
Ex. 14
Ex. 13
REFLEC-
TANCE
(%)
300
600
900
1200
WAVELENGTH (nm)

Fig. 3

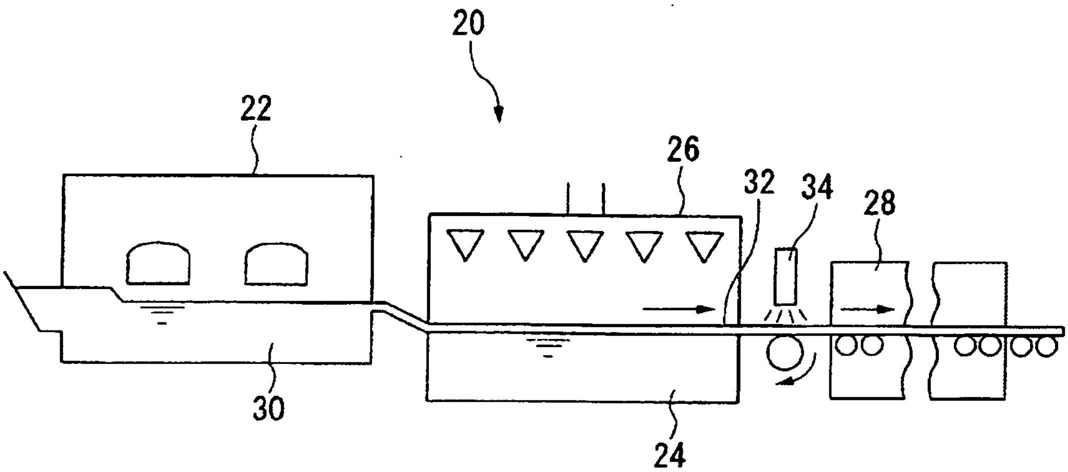

**INTERNATIONAL SEARCH REPORT**

International application No.
PCT/JP2009/070706

A. CLASSIFICATION OF SUBJECT MATTER
*C03C17/25*(2006.01)i

According to International Patent Classification (IPC) or to both national classification and IPC

B. FIELDS SEARCHED

Minimum documentation searched (classification system followed by classification symbols)
C03C17/00-17/34, C03B33/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y<br>A | JP 54-66914 A (Asahi Glass Co., Ltd.),<br>29 May 1979 (29.05.1979),<br>column 7, line 6 to column 8, line 7; column 10,<br>lines 2 to 12<br>(Family: none) | 1,4-8,10-11,<br>14-16,18<br>9,17<br>2-3,12-13 |
| Y | JP 60-235711 A (Fujitsu Ltd.),<br>22 November 1985 (22.11.1985),<br>page 3, upper right column, line 1 to lower<br>left column, line 2<br>(Family: none) | 9,17 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>27 January, 2010 (27.01.10) | Date of mailing of the international search report<br>09 February, 2010 (09.02.10) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2009/070706

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The invention in claim 1 does not have a special technical feature, since the invention is described in the following document 1. The inventions in claims 1 - 18 are not so linked as to form a single general inventive concept.

Document 1: JP 54-66914 A
Main invention: claims 1 - 6, 9, 18

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7097237 A
- JP 2008317407 A
- JP 2009256068 A